# EUROPÄISCHE PATENTANMELDUNG

(11) **EP 0 735 106 A2**
(43) Veröffentlichungstag der Anmeldung: **02.10.1996**
(21) Anmeldenummer: 96104043.3
(22) Anmeldetag: 14.03.1996
(51) Int. Cl.: C09B 31/08, C09D 11/00

(54) **Disazofarbstoffe**

(30) Priorität: 27.03.1995 DE 19511228
(71) Anmelder: BAYER AG, 51368 Leverkusen (DE)
(72) Erfinder: Jäger, Horst, Dr., 51375 Leverkusen (DE)

(57) **Zusammenfassung**

Es wurden Disazofarbstoffe gefunden, die in Form der freien Säure der Formel (I) entsprechen, 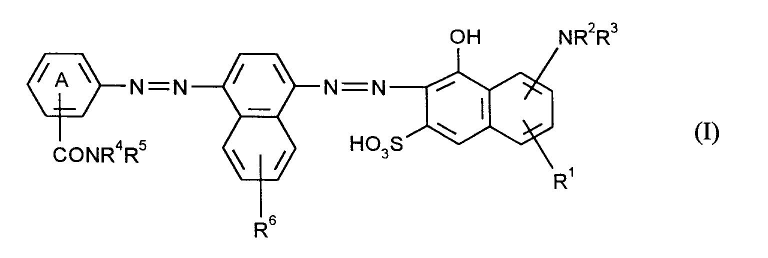
- X: für H oder einen gegebenenfalls substituierten aliphatischen oder aromatischen Rest steht und
- R¹ bis R⁶ und A: die in der Beschreibung angegebene Bedeutung haben,
die sich hervorragend für den Ink-jet-Druck eignen.

## Beschreibung

Die Erfindung betrifft Disazofarbstoffe, ein Verfahren zu ihrer Herstellung, ihre Verwendung zum Färben oder Bedrucken von hydroxygruppen- oder amidgruppenstoffhaltigen organischen Substraten sowie Tinten, die diese Farbstoffe enthalten.

Aus EP-A-494 523 (= US-A-5 177 195) sind bereits Disazofarbstoffe bekannt, die jedoch noch gewisse anwendungstechnische Nachteile aufweisen.

Es wurden nun Disazofarbstoffe gefunden, die in Form der freien Säure der Formel (I) entsprechen, 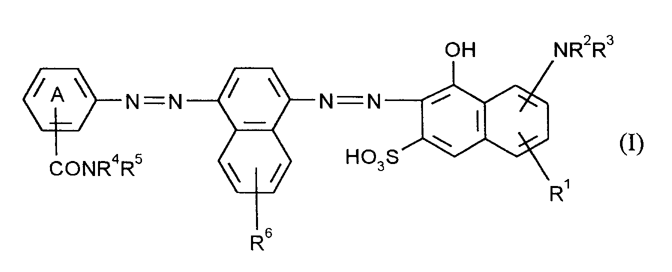 worin die Carbonamidgruppe des Ringes A in o-, m- oder p-Stellung zur Azobrücke steht,
- R¹: Wasserstoff oder Sulfo bedeutet,
- R² und R³: unabhängig voneinander für Wasserstoff, einen gegebenenfalls substituierten C₆-C₁₀-Arylrest, insbesondere Phenylrest, stehen, wobei als mögliche Substituenten insbesondere C₁-C₄-Alkoxy, insbesondere OCH₃, C₁-C₄-Alkyl, insbesondere Methyl, Halogen, insbesondere Cl, SO₃H oder COOH in Frage kommen, oder für C₁-C₆-Alkyl steht, das gegebenenfalls durch Substituenten wie OH, COOH, OSO₃H, SO₃H, CN und/oder OCH₃ substituiert ist, oder
- R⁴ und R⁵: unabhängig voneinander für H oder einen aliphatischen, insbesondere C₁-C₁₇-Alkylrest, der gegebenenfalls durch Substituenten wie OH, COOH, OSO₃H, SO₃H, CN und/oder OCH₃ substituiert ist oder einen aromatischen C₆-C₁₀-Arylrest, insbesondere Phenyl stehen, der unsubstituiert oder durch C₁-C₄-Alkyl, insbesondere Methyl, C₁-C₄-Alkoxy, insbesondere Methoxy, Halogen, insbesondere Cl, SO₃H und/oder COOH substituiert ist,
- R⁶: Wasserstoff, SO₃H oder COOH bedeutet,
und der Benzolring A gegebenenfalls weiter substituiert ist. Beispielhaft genannte Substituenten des Benzolringes A sind Halogene, wie Cl, F oder Br, C₁-C₄-Alkylreste, wie Methyl und/oder C₁-C₄-Alkoxyreste, wie Methoxy.

Bevorzugte Disazofarbstoffe der Formel (I) entsprechen der Formel (II) 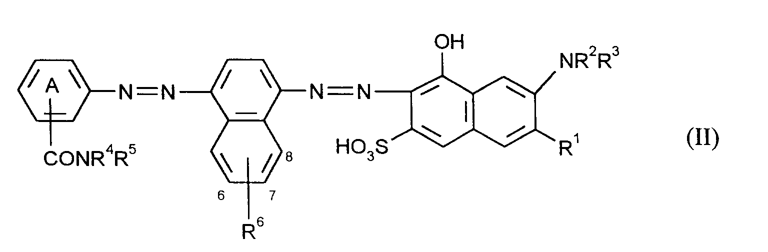 worin
R¹ bis R⁶ und A die obige Bedeutung haben und R⁶ in 6-, 7- oder 8-Stellung des Naphthalinrings gebunden ist.

Besonders bevorzugte Disazofarbstoffe der Formel (I) sind solche, worin
- R²: für H oder einen Rest der Formel 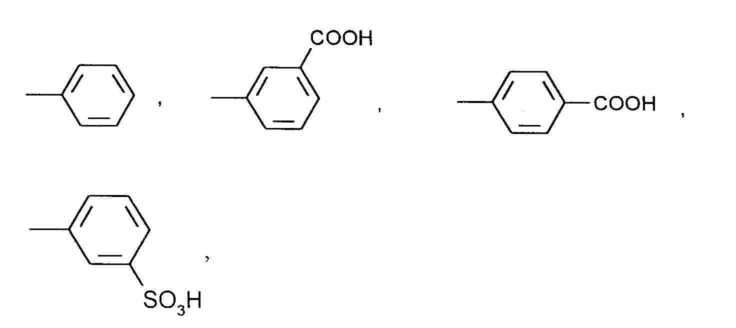 -CH₃, -C₂H₅, -CH₂COOH, -CH₂CH₂COOH oder -CH₂CH₂OH bedeutet,
- R³: für H oder einen Rest der Formel
-CH₃, -C₂H₅, -CH₂COOH, -CH₂CH₂COOH, -CH₂CH₂OH oder -CH₂CH₂CN steht,
und die übrigen Reste die oben angegebene breiteste Bedeutung besitzen.

Ebenfalls besonders bevorzugte Disazofarbstoffe der Formel (I) sind solche, worin
- R⁴: H oder einen Rest der Formel -CH₃, -CH₂CH₂OH, -CH₂COOH, -CH₂CH₂COOH, -CH₂CH₂SO₃H, -CH₂CH₂OSO₃H bedeutet,
- R⁵: H oder -CH₃, -CH₂CH₂OH, -CH₂COOH, -CH₂CH₂COOH, -(CH₂)₃-COOH, -(CH₂)₄-COOH, -(CH₂)₅-COOH, -(CH₂)₉-COOH, -(CH₂)₁₀-COOH, -(CH₂)₁₁-COOH, -(CH₂)₁₂-COOH, 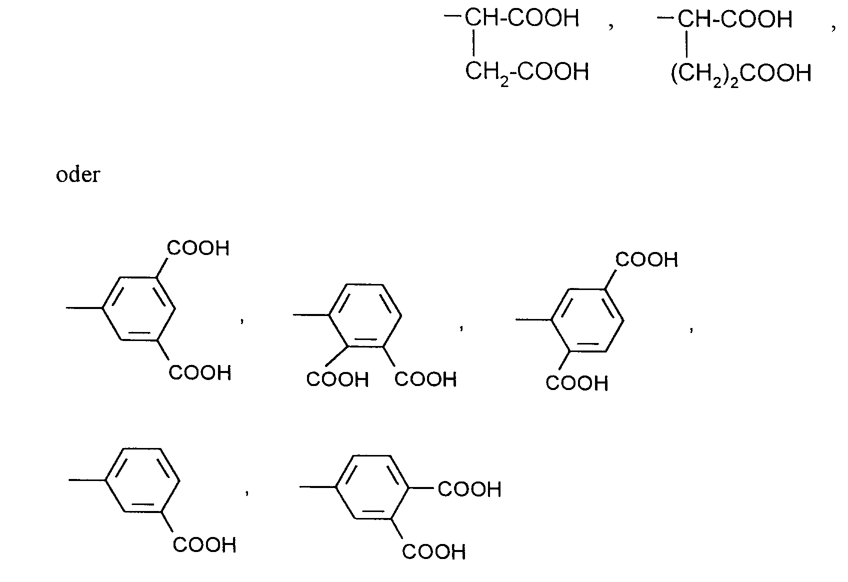 bedeutet,
und die übrigen Reste sowie der Ring A die oben angegebene breiteste Bedeutung haben.

In einer ganz bevorzugten Ausführungsform der Disazofarbstoffe der Formel (I) ist die Anzahl der COOH-Gruppen in den Resten R¹ bis R⁵ eins, insbesondere zwei oder drei.

Besonders bevorzugt sind auch Disazofarbstoffe der Formel (I), die der Formel (III) entsprechen, 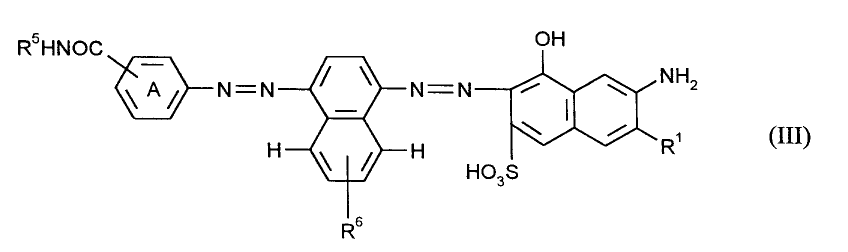 worin
- R⁵: einen Rest der Formel 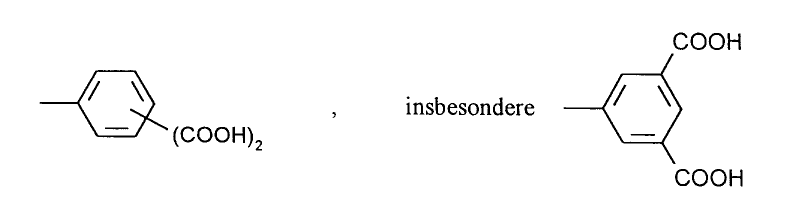
bedeutet und
R¹ und R⁶ die obengenannte breiteste Bedeutung besitzen und der Ring A in der oben beschriebenen Weise weiter substituiert sein kann.

Weiterhin bevorzugt sind solche Farbstoffe der Formel (I), worin
R¹ = H und R⁶ = SO₃H
oder
R¹ = SO₃H und R⁶ = SO₃H
oder
R¹ = SO₃H und R⁶ = H
oder
R¹ und R⁶ = H bedeutet.

Die erfindungsgemäßen Farbstoffe werden im allgemeinen in Form ihrer Salze eingesetzt, insbesondere der Alkalisalze (Li, Na, K), der Ammoniumsalze, Mono-, Di- oder Tris-C₁-C₄-Alkylammoniumsalze, insbesondere auch der C₁-C₄-Alkanolammoniumsalze. Es ist insbesondere vorteilhaft, die erfindungsgemäßen Farbstoffe in Form ihrer Ammoniumsalze (NH₄) oder ihrer gemischten Ammoniumalkalisalze einzusetzen.

Die Erfindung betrifft weiterhin ein Verfahren zur Herstellung der erfindungsgemäßen Farbstoffe der Formel (I), dadurch gekennzeichnet, daß man Amine der Formel (IV) 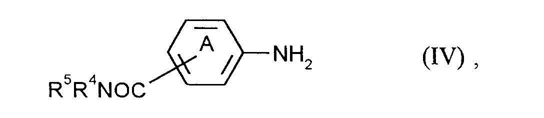 worin die Carbonamidgruppe in o-, m- oder p-Stellung zur NH₂-Gruppe steht, R⁴ und R⁵ die oben angegebene breiteste Bedeutung haben und der Ring A in der oben angegebenen Weise weiter substituiert sein kann,
diazotiert und mit 1-Aminonaphthalinen der Formel (V) 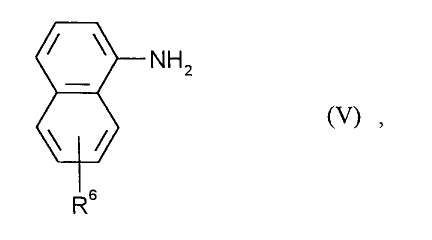 worin R⁶ die angegebene breiteste Bedeutung hat, im sauren bis neutralen pH-Bereich zu einem Monoazofarbstoff der Formel (VI) kuppelt 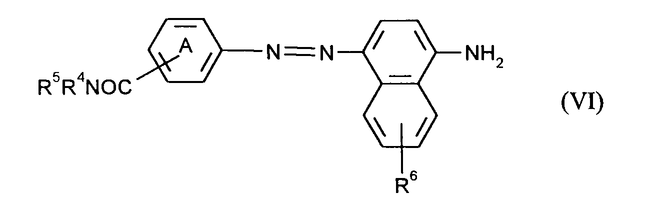 der dann, vorzugsweise ohne Zwischenisolierung, diazotiert und mit einer Kupplungskomponente der Formel (VII) 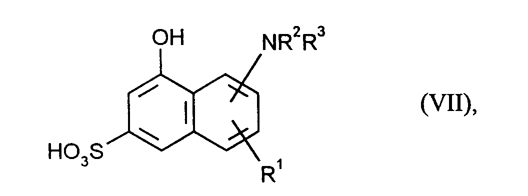 worin R¹, R² und R³ die obige breiteste Bedeutung haben,
im neutralen bis alkalischen pH-Bereich zu dem Farbstoff der Formel (I) gekuppelt wird.

Das Verfahren wird vorzugsweise in Wasser durchgeführt. Vorzugsweise erfolgt die Umsetzung der diazotierten Verbindung IV mit der Verbindung V bei pH-Werten von 2 bis 8, insbesondere von 4 bis 6. Für die Umsetzung der diazotierten Form der Verbindung der Formel VI mit der Verbindung der Formel VII wählt man vorzugsweise einen pH-Bereich von 6 bis 10, insbesondere von 7 bis 9 aus.

Die Verbindungen der Formel (IV) können beispielsweise durch Acylieren von Verbindungen der Formel (VIII)

R⁵R⁴NH (VIII),

worin R⁵ und R⁴ die angegebene Bedeutung haben,
mit Carbonsäurechloriden der Formel (IX) 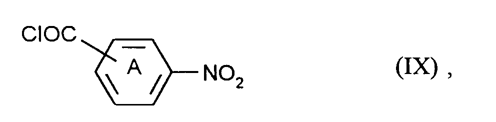 worin
der Ring A auf die obige Weise weitersubstituiert sein kann und die Chlorcarbonylgruppe in o-, m- oder p-Stellung zur Nitrogruppe gebunden ist, und Reduktion der dabei gebildeten Verbindung erhalten werden. Die Reduktion kann z.B. durch Wasserstoff in Gegenwart von Raney-Nickel erfolgen.

Beispiele für Verbindungen der Formeln V, VII, VIII und IX sind die folgenden:

### Verbindungen V:

1-Aminonaphthalin
1-Aminonaphthalin-6-sulfonsäure
1-Aminonaphthalin-7-sulfonsäure
1-Aminonaphthalin-6-carbonsäure
1-Aminonaphthalin-7-carbonsäure

### Verbindungen VII:

1-Hydroxy-7-aminonaphthalin-3,6-disulfonsäure
1-Hydroxy-7-amino-naphthalin-3-sulfonsäure
1-Hydroxy-7-phenylamino-naphthalin-3,6-disulfonsäure
1-Hydroxy-7-(3'-carboxy-phenylamino)-naphthalin-3-sulfonsäure
1-Hydroxy-7-(4'-carboxy-phenylamino)-naphthalin-3-sulfonsäure
1-Hydroxy-7-carboxymethylamino-naphthalin-3-sulfonsäure
1-Hydroxy-7-(bis-β-hydroxyethylamino)naphthalin-3-sulfonsäure
1-Hydroxy-7-β-carboxyethylamino-naphthalin-3-sulfonsäure

### Verbindungen VIII:

1-Amino-3,5-dicarboxy-benzol
1-Amino-2,5-dicarboxy-benzol
1-Amino-2,4-dicarboxy-benzol
1-Amino-3,4-dicarboxy-benzol
1-Amino-2,3-dicarboxy-benzol
Aminoessigsäure
Methylaminoessigsäure
3-Aminopropionsäure
4-Aminobuttersäure
6-Amino-capronsäure
11-Aminoundecansäure
Aminobernsteinsäure
Aminoglutarsäure
N,N-Bis-(β-carboxyethyl)-amin
Diethanolamin
Taurin
Methyltaurin

### Verbindungen IX:

2-Nitrobenzoylchlorid
3-Nitrobenzoylchlorid
4-Nitrobenzoylchlorid
4-Chlor-3-nitrobenzoylchlorid
4-Methyl-3-nitrobenzoylchlorid

Die Farbstoffe der Formel (I) können in ihre Ammonium- oder gegebenenfalls substituierten Alkylammoniumsalze beispielsweise dadurch überführt werden, indem man die Lösung eines Alkalisalzes eines Farbstoffes der Formel (I) in Wasser mit einer Mineralsäure ansäuert (pH 1 bis 3), den ausgefallenen Farbstoff isoliert und gegebenenfalls mit Wasser wäscht, anschließend die Paste des Farbstoffes in Wasser anrührt und mit Ammoniak oder einem gegebenenfalls substituierten Alkylamin auf pH 9,0 bis 10,0 stellt und die resultierende Lösung gegebenenfalls durch Dialyse salzfrei macht.

Die Verbindungen der Formel (I) in Form ihrer Salze sowie Gemische davon finden Verwendung zum Färben oder Bedrucken von hydroxygruppen- oder amidgruppenhaltigen organischen Substraten, bevorzugt von aus Cellulosefasern bestehenden oder diese enthaltenden Textilmaterialien wie Baumwolle, sowie zum Färben oder Bedrucken von Papier oder Leder.

Bevorzugt eignen sich die Verbindungen der Formel (I) als Farbstoffe für Tintenstrahl-Aufzeichnungsflüssigkeiten.

Zur Herstellung dieser ebenfalls erfindungsgemäßen Drucktinten wird mindestens ein Farbstoff der Formel (I) in Wasser und/oder einem oder mehreren organischen Lösungsmitteln, gegebenenfalls unter Zusatz von organischen und/oder anorganischen Säuren oder organischen und/oder anorganischen Basen, gelöst. Vorzugsweise wird ein Farbstoff der Formel (I) zur Herstellung dieser Drucktinten verwendet, der zuvor durch Anwendung von Membranverfahren wie beispielsweise Ultrafiltration, Mikrofiltration, Reversosmose oder deren Kombination gereinigt, entsalzt und ggf. aufkonzentriert wurde. Die bei den angegebenen Membranverfahren anfallenden Lösungen oder Suspensionen können direkt zur Herstellung der Drucktinten eingesetzt werden. Es ist aber auch möglich, die Lösungen oder Suspensionen zuvor in feste Formulierungen, z.B. duch Sprühtrocknung, zu überführen.

Es ist auch möglich, die bei der Synthese des Farbstoffs anfallende Syntheselösung oder -suspension ohne Zwischenisolierung des Farbstoffs, gegebenenfalls unter Zusatz von anorganischen und/oder organischen Basen oder anorganischen und/oder organischen Säuren und gegebenenfalls unter Zusatz von einem oder mehreren organischen Lösungsmitteln und Wasser, in die Drucktinten zu überführen.

Die Syntheselösung oder -suspension wird vorzugsweise zuvor durch Anwendung von Membranverfahren wie beispielsweise Ultrafiltration, Mikrofiltration und Reversosmose oder deren Kombination gereinigt und entsalzt.

Vorzugsweise enthalten diese Drucktinten 0,1 bis 20 Gew.-%, insbesondere 0,5 bis 15 Gew.-% und ganz besonders bevorzugt 0,5 bis 10 Gew.-% eines Farbstoffs der Formel (I) gelöst in Wasser und/oder einem oder mehreren organischen Lösungsmitteln. Der pH-Wert der Drucktinten kann zwischen pH 3 und 9 liegen. Vorzugsweise haben die Drucktinten einen pH-Wert von 4 bis 8.

Zur Einstellung des pH-Wertes können übliche organische und/oder anorganische Säuren wie z.B. Salzsäure, Milchsäure, p-Toluolsulfonsäure, Essigsäure oder Zitronensäure oder organische und/oder anorganische Basen wie Alkalihydroxide oder Amine wie Methyldiethanolamin, Diethanolamin, Triethanolamin oder Polyglykolamine wie z.B. das Umsetzungsprodukt von Ammoniak mit 6 Mol Ethylenoxid eingesetzt werden. Weiterhin können die Drucktinten übliche Puffer wie z.B. Acetate, Citrate oder Phosphonate in den hierfür üblichen Mengen enthalten.

Des weiteren können die erfindungsgemäßen Drucktinten übliche Additive wie z.B. Tenside, Fungizide, Bakterizide oder Bindemittel wie z.B. Acrylatbinder in den für diese Additive üblichen Mengen enthalten.

Die erfindungsgemäßen Drucktinten enthalten im allgemeinen bis zu 50 Gew.-% organische Lösungsmittel, vorzugsweise jedoch weniger als 30 Gew.-%. Besonders bevorzugt sind dabei Drucktinten, die 2 bis 30 Gew.-% organische Lösungsmittel enthalten.

Als organische Lösungsmittel kommen insbesondere wasserlösliche organische Lösungsmittel wie z.B. C₁-C₄-Alkanole wie Methanol, Ethanol, n-Propanol, Isopropanol, n-Butanol, sek.-Butanol, tert.-Butanol, Isobutanol; Pentandiole; Hexantriole; Amide wie Formamide und Dimethylacetamid; Ketone oder Ketonalkohole wie Aceton und Diacetonalkohole; Ester wie Tetrahydrofuran und Dioxan; Stickstoffhaltige Heterocyclen wie 2-Pyrrolidon, N-Methyl-pyrrolid-2-on und 1,3-Dimethylimidazolid-2-on; Polyalkylenglykole wie Polyethylenglykol und Polypropylenglykol; Alkylenglykole und Thioglykole mit C₂-C₆-Alkyleneinheiten wie Ethylenglykol, Propylenglykol, Butylenglykol, Triethylenglykol, Thiodiglykol, Hexylenglykol und Diethylenglykol; andere Polyole wie Glycerin und 1,2,6-Hexantriol; Alkylether und Polyalkylether von Alkoholen wie 2-Methoxyethanol, 2-(2-Methoxy-ethoxy)ethanol, 2-(2-Ethoxyethoxy)ethanol, 2-Methoxy-2-ethoxy-2-ethoxyethanol, 2-[2-(2-Methoxyethoxy)ethoxy]ethanol, und 2-[2-(2-Ethoxyethoxy)-ethoxy]ethanol in Frage.

Bevorzugte wasserlösliche organische Lösemittel sind Glykole und Glykolether wie Ethylenglykol, Diethylenglykol, Triethylenglykol, 2-Methoxy-2-ethoxy-2-ethoxyethanol; Polyethylenglykol mit einem Molgewicht bis 500, heterocyclische Ketone wie 2-Pyrrolidon, N-Methylpyrrolid-2-on und 1,3-Dimethylimidazolid-2-on; 1,5-Pentandiol Bevorzugte Lösungsmittelgemische sind binäre Mischungen von Wasser und Diethylenglykol, Wasser und 2-Pyrrolidon, Wasser und 1,5-Pentandiol und ternäre Mischungen aus Wasser, Diethylenglykol und N-Methylpyrrolid-2-on.

Die Drucktinten können außer den Farbstoffen der Formel (I) auch noch einen oder mehrere für Drucktinten übliche Farbstoffe, wie z.B. die im Color Index gelisteten Farbstoffe enthalten, die beispielsweise zur Nuancierung dienen können.

Die erfindungsgemäßen Drucktinten werden vorzugsweise als Aufzeichnungsflüssigkeit für Tintenstrahlaufzeichnungssysteme verwendet. Bei den Tintenstrahlaufzeichnungssystemen handelt es sich z.B. um Inkjet-Drucker wie Thermal Jet, Bubble Jet, Piezo-Inkjet oder Ventil Inkjet. Bevorzugtes Aufzeichnungsmaterial für Inkjet-Drucker ist Papier.

Das Tintenstrahlaufzeichnungsverfahren ist an sich bekannt. Dabei werden Tröpfchen einer Schreibflüssigkeit aus einer oder mehreren kleinen Düsen gezielt auf ein Trägermaterial geschossen. Durch elektronische Aussteuerung werden die einzelnen Tröpfchen zu Schriftzeichen oder graphischen Mustern zusammengefaßt. Dabei ist es erforderlich, daß die Tinte mit dem Trägermaterial, bevorzugt Papier, wechselwirkt. Die Tinte sollte in das Papier eindringen, ohne zuviel auseinanderzulaufen, da sonst die Druckqualität leidet. Die gedruckte Information muß schnell trocknen, sowie wasserfest und wischfest sein. Viele Tinten besitzen einige der geforderten Eigenschaften auf Kosten der anderen Eigenschaften.

Überraschenderweise wurde gefunden, daß die erfindungsgemäßen Farbstoffe der Formel (I) in Form ihrer Drucktinten in Tintenstrahlaufzeichnungssystemen besonders wasserfeste und wischfeste Drucke ergeben. Die erfindungsgemäßen Drucktinten ergeben auf einer Vielzähl unterschiedlicher Papiere gute Wasserechtheiten. Besonders wichtig ist ihre Eignung für eine Vielzahl von nicht gestrichenen Papieren, sogenannten plain papers. Hier sind besonders die weit verbreiteten weitgehend neutralen Schreibpapiere zu nennen, die zunehmende Verbreitung finden.

Gleichermaßen bevorzugt ist das Bedrucken von Kunststoff-Folien mit Tintenaufzeichnungsverfahren unter Verwendung der erfindungsgemäßen Drucktinten. Die dabei bevorzugt zum Einsatz kommenden Kunststoff-Folien sind transparente Polyethylen-Folien.

Die Erfindung betrifft weiterhin ein Verfahren zum Massefärben von Papier dadurch gekennzeichnet, daß man einen Farbstoff der Formel (I) verwendet.

Bei der Verwendung der Farbstoffe der Formel (I) in Form ihrer Drucktinten als Aufzeichnungsflüssigkeiten für Tintenstrahlaufzeichnungssysteme erhält man schwarze scharfe Drucke mit guter Wasser-, Licht- und Abriebechtheit.

Die erfindungsgemäßen Tinten sind lager- und gebrauchsstabil, ihre Viskosität und ihre Oberflächenspannung sind den unterschiedlichen Erfordernissen anpassbar; sie besitzen gute Aufzeichnungsfähigkeit und Strahlstabilitäten.

Die Formeln der wasserlöslichen Farbstoffe in der Beschreibung und in den Beispielen sind die der freien Säuren. Angewandt werden die Farbstoffe im allgemeinen in Form ihrer Alkali-, Ammonium- und substituierten Ammoniumsalze oder ihrer gemischten Salze.

### Beispiel 1

30 g (0,1 Mol) 5-[(4'-Aminobenzoyl)amino]-1,3-biscarboxy-benzol (Diazokomponente; erhältlich durch Acylieren von 5-Aminoisophthalsäure mit p-Nitrobenzoylchlorid und anschließende Reduktion der Nitrogruppe) wurden in 500 ml Wasser bei pH 8 bis 9 gelöst. Man setzte 70 ml 10 %ige Natriumnitritlösung zu und tropfte das Gemisch in eine Vorlage aus 40 ml konzentrierter Salzsäure und 200 ml Eiswasser. Die resultierende Suspension rührte man 2 Stunden bei 10 bis 15°C und entfernte den Überschuß an Nitrit mit Amidosulfonsäure.

Zu dieser Suspension tropfte man bei 5 bis 10°C eine neutrale Lösung von 22,3 g (0,1 Mol) 1-Amino-6-sulfo-naphthalin (Mittelkomponente) in 300 ml Wasser und stellte durch Einstreuen von Natriumhydrogencarbonat den pH auf 5,0 bis 5,5. Anschließend rührte man 2 bis 3 Stunden um die Kupplung zu Ende zu bringen.

Der ausgefallene Farbstoff wurde abgesaugt. Die resultierende Paste wurde in 500 ml Wasser bei pH 8 bis 9 gelöst. Die Lösung versetzte man mit 70 ml 10 %iger Natriumnitritlösung und tropfte das Gemisch bei 20 bis 25°C in eine Vorlage aus 40 ml konzentrierter Salzsäure und 200 ml Wasser. Man rührte bei Raumtemperatur so lange, bis die Diazotierung zu Ende war. Der Überschuß an Nitrit wurde mit Amidosulfonsäure entfernt. Die Suspension der Diazoverbindung gab man dann unter gutem Rühren in eine Lösung von 31,9 g 2-Amino-8-hydroxynaphthalin-3 ,6-disulfonsäure (Endkomponente) in 200 ml Wasser, wobei man durch gleichzeitiges Zutropfen von 15 %iger Sodalösung einen pH von 8,5 bis 9,5 einhielt. Man rührte noch 1 bis 2 Stunden und saugte den ausgefallenen Farbstoff ab. Zur Reinigung wurde der Farbstoff in Wasser bei 50°C und pH 9 gelöst und mit 3 Volumen-% Kochsalz wieder ausgesalzen.

Die Paste wurde dann in Wasser gelöst und dialysiert. Nach der Dialyse wurde die Lösung durch ein 2,0 µ Filter filtriert und zum Trocknen gebracht. Man erhielt eine schwarzes Pulver, das sich leicht in Wasser löste.

Der Farbstoff entspricht in Form der freien Säure folgender Formel

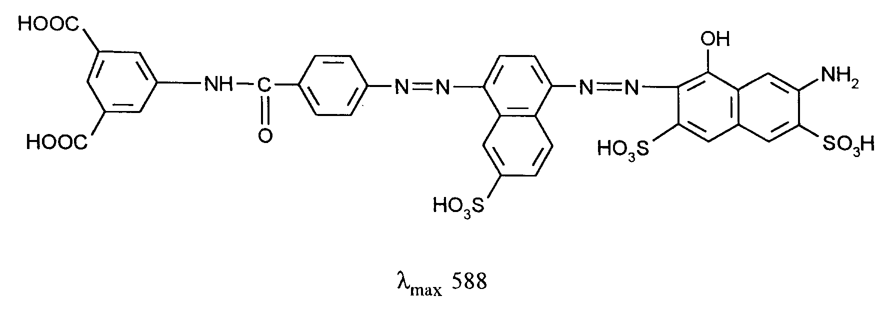

Nach den Angaben dieses Beispiels erhielt man weitere schwarze Farbstoffe, wenn man die nachfolgend aufgeführten Diazo-, Mittel- und Endkomponenten verwendete.

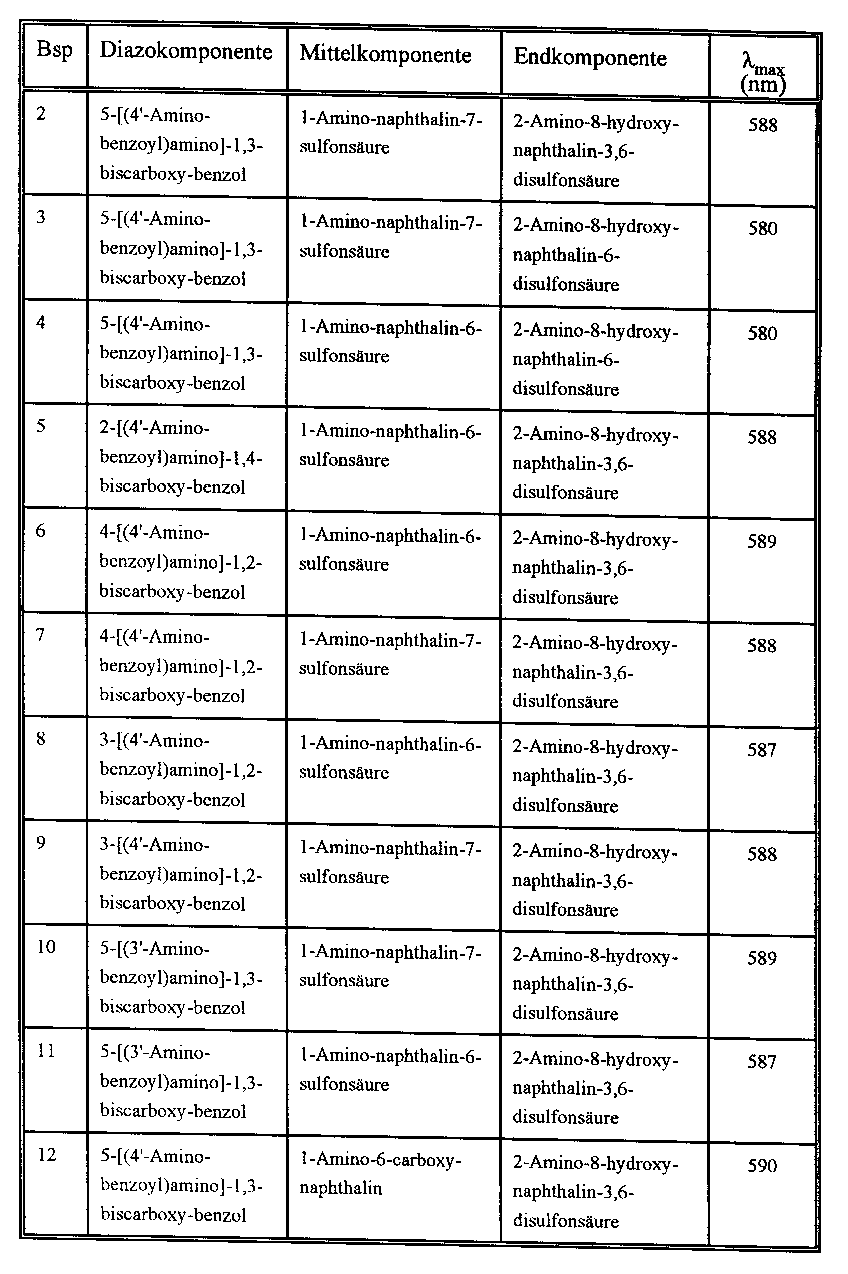

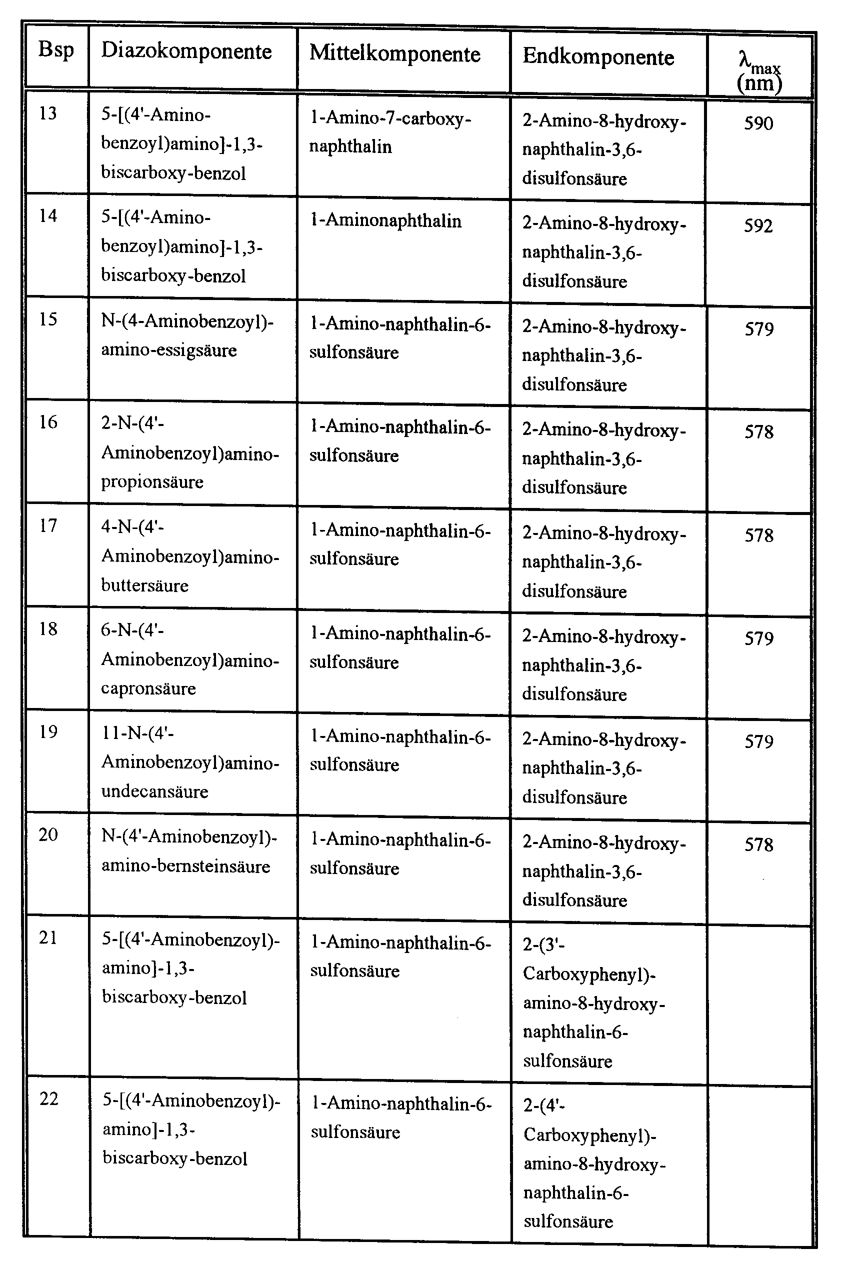

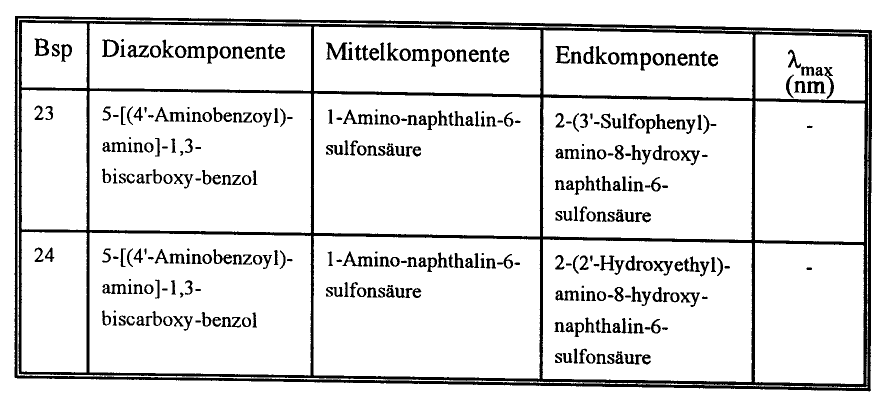

### Beispiel 25

Die nach Beispiel 1 erhaltene wasserfeuchte Paste des Farbstoffes (vor der Dialyse) wurde in 1000 ml Wasser verrührt und mit Salzsäure auf pH 1 gestellt. Man rührte so lange, bis eine homogene Suspension vorliegt. Diese wurde dann abgesaugt und die resultierende Paste erneut in 1 000 ml Wasser angerührt. Die Suspension wurde mit konzentriertem Ammoniak auf pH 9,5 gestellt, wobei man eine Lösung erhält. Diese wurde zur Entfernung der Chloridionen dialysiert. Anschließend filtrierte man durch ein 2,0 µ Filter und brachte die Lösung zur Trockne. Dabei erhielt man das gemischte Ammonium-Natriumsalz des Farbstoffes aus Beispiel 1.

In der gleichen Weise konnte man die Farbstoffe der Beispiele 2 bis 24 in ihre gemischten Ammonium-Natriumsalze überführen.

Weitere Farbstoffe erhielt man, indem man anstelle von Ammoniak folgende Amine verwendete: Methylamin, Dimethylamin, Ethylamin, n-Propylamin, iso-Propylamin, n-Butylamin, Piperidin, Morpholin, N-Methylethanolamin, Diethanolamin oder Triethanolamin.

### Beispiel 26

3,0 g Farbstoff aus Beispiel 15 wurden in 100 g eines Gemisches aus 84 g Wasser, 8 g 1,5-Pentandiol und 8 g 2-Pyrrolidon gelöst. Diese Tinte gab mit einem Tintenstrahldrucker, der nach dem Prinzip der Bubble-Jet- oder der Piezo-Technik arbeitet, auf Papier konturenscharfe schwarze Drucke, die licht-, reib- und wasserecht waren.

| Farbstoff aus Beispiel | Farbstoff (g) | flüssiges Medium (g) |
|---|---|---|
| 25 | 3 | 10 Diethylenglykol |
| | | 90 Wasser |
| 25 | 3 | 60 Ethylenglykol |
| | | 40 Wasser |
| 2 | 3 | 0,2 Natriumcarbonat |
| | | 20 2-Pyrrolidon |
| | | 89,8 Wasser |
| 25 | 3 | 10 Ethylenglykol |
| | | 5 N-Methylpyrrolidon |
| | | 85 Wasser |
| 3 | 3 | 25 Glycerin |
| | | 10 Triethanolamin |
| | | 65 Wasser |

## Patentansprüche

1. Verbindungen, die in Form der freien Säure der Formel (I) entsprechen, 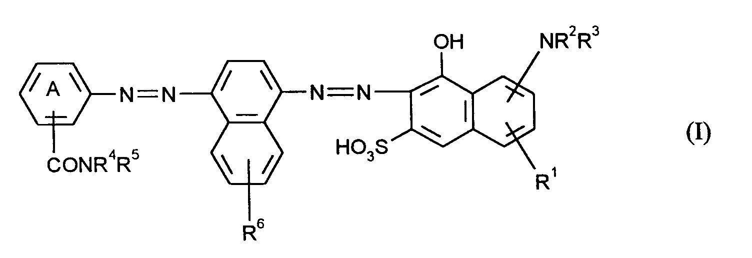 worin die Carbonamidgruppe des Ringes A in o-, m- oder p-Stellung zur Azobrücke steht,
R¹ Wasserstoff oder Sulfo bedeutet,
R² und R³ unabhängig voneinander für Wasserstoff oder einen unsubstituierten oder substituierten C₆-C₁₀-Arylrest, insbesondere Phenylrest oder für gegebenenfalls substituiertes C₁-C₆-Alkyl stehen,
R⁴ und R⁵ unabhängig voneinander für H oder einen aliphatischen-, insbesondere C₁-C₁₇-Alkylrest, der gegebenenfalls substituiert ist oder aromatischen C₆-C₁₀-Arylrest, insbesondere Phenyl stehen, der unsubstituiert oder gegebenenfalls substituiert ist oder
R⁶ H, SO₃H oder COOH bedeutet,
und der Benzolring A gegebenenfalls weiter substituiert ist.

2. Verbindungen gemäß Anspruch 1, worin der Benzolring A gegebenenfalls weiter durch Halogen, C₁-C₄-Alkyl und/oder C₁-C₄-Alkoxy substituiert ist.

3. Verbindungen gemäß Anspruch 1 der Formel (I), die der Formel (II) entsprechen 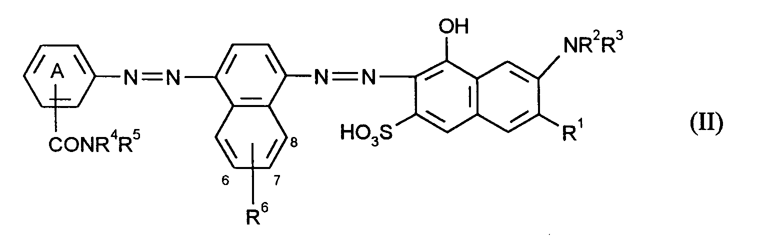 worin
R¹ bis R⁶ und A die in Anspruch 1 angegebene Bedeutung haben und R⁶ in 6-, 7- oder 8-Stellung des Naphthalinrings gebunden ist.

4. Verbindungen gemäß Anspruch 1 der Formel (I), dadurch gekennzeichnet, daß
R² für H oder einen Rest der Formel 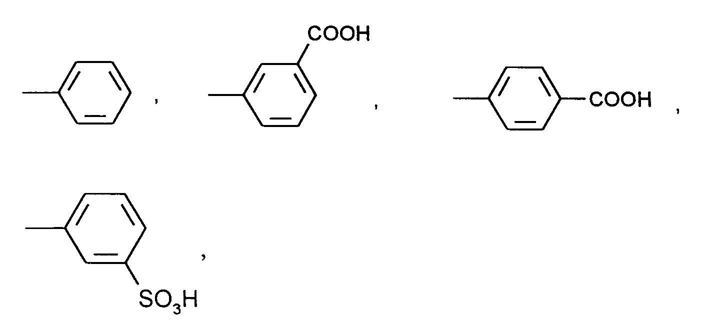 -CH₃, -C₂H₅, -CH₂COOH, -CH₂CH₂COOH oder -CH₂CH₂OH bedeutet,
R³ für H oder einen Rest der Formel
-CH₃, -C₂H₅, -CH₂COOH, -CH₂CH₂COOH, -CH₂CH₂OH oder -CH₂CH₂CN steht,
und die übrigen Reste die in Anspruch 1 angegebene Bedeutung besitzen.

5. Verbindungen gemäß Anspruch 1 der Formel (I), worin
R⁴ H oder einen Rest der Formel -CH₃, -CH₂CH₂OH, -CH₂COOH, -CH₂CH₂COOH, -CH₂CH₂SO₃H, oder -CH₂CH₂OSO₃H bedeutet,
R⁵ H oder -CH₃, -CH₂CH₂OH, -CH₂COOH, -CH₂CH₂COOH, -(CH₂)₃-COOH, -(CH₂)₄-COOH, -(CH₂)₅-COOH, -(CH₂)₉-COOH, -(CH₂)₁₀-COOH, -(CH₂)₁₁-COOH, -(CH₂)₁₂-COOH, 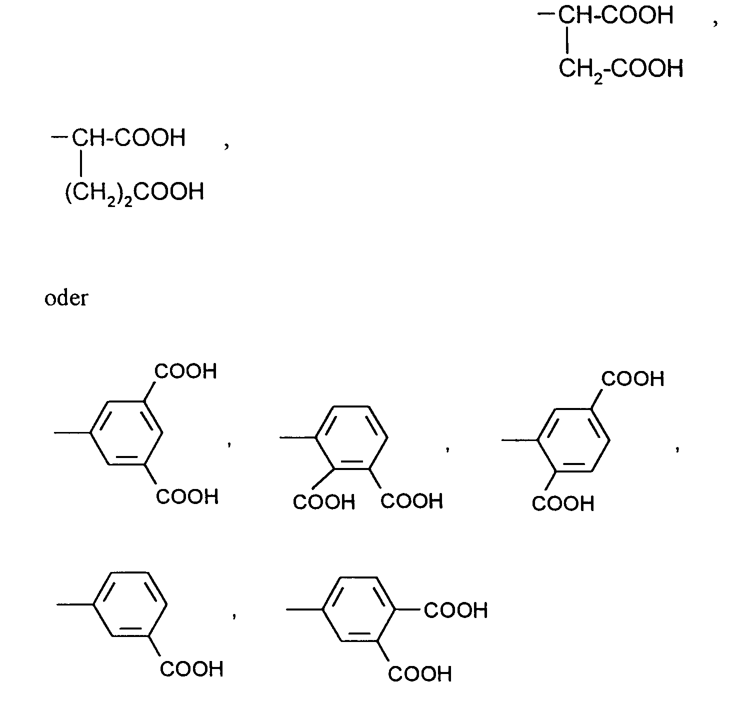
bedeutet und die übrigen Reste sowie der Ring A die in Anspruch 1 angegebene Bedeutung haben.

6. Verbindungen gemäß Anspruch 1 der Formel (I), dadurch gekennzeichnet, daß die Anzahl der COOH-Gruppen in den Resten R¹ bis R⁵ eins, insbesondere zwei oder drei beträgt.

7. Verbindungen gemäß Anspruch 1 der Formel (I), die der Formel (III) entsprechen, 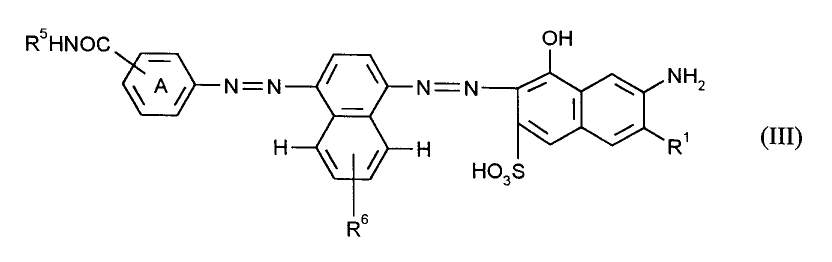 worin
R⁵ einen Rest der Formel 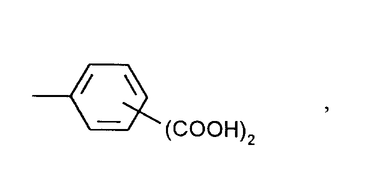
insbesondere 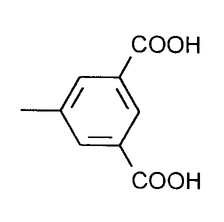 bedeutet und
R¹, R⁶ und A die in Anspruch 1 angegebene Bedeutung haben.

8. Verbindungen gemäß Anspruch 1, dadurch gekennzeichnet, daß
R¹ = H und R⁶ = SO₃H
oder
R¹ = SO₃H und R⁶ = SO₃H
oder
R¹ = SO₃H und R⁶ = H
oder
R¹ und R⁶ = H bedeutet.

9. Verfahren zur Herstellung der Verbindungen der Formel (I) gemäß Anspruch 1, dadurch gekennzeichnet, daß man Amine der Formel (IV) 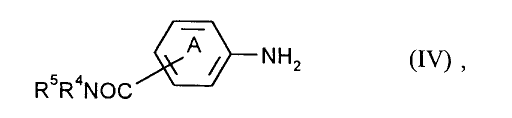 worin die Carbonamidogruppe in o-, m- oder p-Stellung zur NH₂-Gruppe steht, R⁴ und R⁵ die in Anspruch 1 angegebene Bedeutung haben und der Ring A in der in Anspruch 1 angegebenen Weise weiter substituiert sein kann,
diazotiert und mit 1-Aminonaphthalinen der Formel (V) 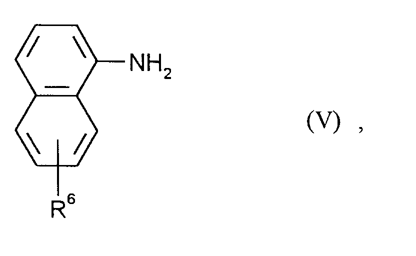 worin R⁶ die in Anspruch 1 angegebene Bedeutung hat, im sauren bis neutralen pH-Bereich zu einem Monoazofarbstoff der Formel (VI) kuppelt 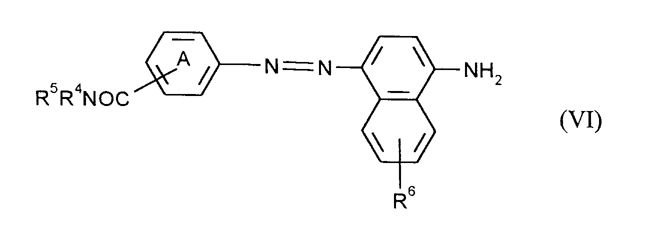 der dann, vorzugsweise ohne Zwischenisolierung, diazotiert und mit einer Kupplungskomponente der Formel (VII) 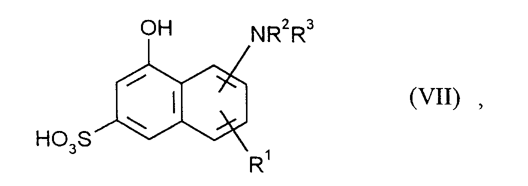 worin R¹, R² und R³ die in Anspruch 1 angegebene Bedeutung haben,
im neutralen bis alkalischen pH-Bereich zu dem Farbstoff der Formel (I) gekuppelt wird.

10. Verfahren zum Färben oder Bedrucken von hydroxygruppen- oder amidgruppenhaltigen organischen Substraten, insbesondere von aus Cellulosefasern bestehenden oder diese enthaltenden Textilmaterialien, insbesondere Baumwolle, sowie zum Färben oder Bedrucken von Papier oder Leder, dadurch gekennzeichnet, daß man Verbindungen nach Anspruch 1 verwendet.

11. Tinten, geeignet als Tintenstrahl-Aufzeichnungsflüssigkeiten, enthaltend etwa 1 bis 20 Gew.-% eines Farbstoffes der Formel (I), 80 bis 99 Gew.-% Wasser und/oder polare protische oder dipolare aprotische Lösungsmittel sowie gegebenenfalls weitere übliche Bestandteile.

12. Verwendung der Tinten gemäß Anspruch 8 in Tintenstrahlaufzeichnungssystemen, insbesondere zum Ink-Jet-Druck.
